(19) **Europäisches Patentamt / European Patent Office / Office européen des brevets**

(11) **EP 3 387 260 B1**

(12) **FASCICULE DE BREVET EUROPÉEN**

(45) Date de publication et mention
de la délivrance du brevet:
**16.09.2020 Bulletin 2020/38**

(21) Numéro de dépôt: **16819614.5**

(22) Date de dépôt: **07.12.2016**

(51) Int Cl.:
**F04D 27/02** *(2006.01)*  **F01D 17/10** *(2006.01)*
**F02C 9/18** *(2006.01)*  **F04D 29/66** *(2006.01)*

(86) Numéro de dépôt international:
**PCT/FR2016/053243**

(87) Numéro de publication internationale:
**WO 2017/098147 (15.06.2017 Gazette 2017/24)**

(54) **SYSTÈME DE DÉCHARGE D'UN FLUX DE COMPRESSEUR D'UNE TURBOMACHINE**

SYSTEM ZUM ENTLADEN EINES VERDICHTERSTROMS EINES TURBINENMOTORS

SYSTEM FOR DISCHARGING A COMPRESSOR FLOW OF A TURBINE ENGINE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.12.2015 FR 1561941**

(43) Date de publication de la demande:
**17.10.2018 Bulletin 2018/42**

(73) Titulaire: **Safran Aircraft Engines**
**75015 Paris (FR)**

(72) Inventeurs:
• **REGNARD, Josselin, David, Florian**
**77550 Moissy-Cramayel (FR)**
• **BAUDOIN, Laurent, Louis, Robert**
**77550 Moissy-Cramayel (FR)**

(74) Mandataire: **Regimbeau**
**20, rue de Chazelles**
**75847 Paris Cedex 17 (FR)**

(56) Documents cités:
FR-A1- 3 016 654    GB-A- 1 166 843
US-A1- 2005 067 218    US-A1- 2010 043 447
US-B1- 6 343 672

**Description**

DOMAINE TECHNIQUE GENERAL

L'invention concerne un système de décharge d'air comprimé au niveau des compresseurs de turbomachines.

ETAT DE L'ART

Une turbomachine comprend classiquement un compresseur haute pression et un compresseur basse pression.

Selon le régime du fonctionnement de la turbomachine (par exemple ralenti, ou pleins gaz), les compresseurs présentent un fonctionnement différent.

Il peut exister un besoin de prélèvement de l'air sous pression et de le réinjecter en aval, une fois détendu, par exemple lorsque la turbomachine est en régime transitoire ou en régime stabilisé selon les systèmes de prélèvement d'air. Par exemple, sur un turbofan on peut trouver un système de prélèvement nommé TBV pour *transcient bleed valve* qui permet de décharger par exemple le compresseur haute pression. Un autre système nommé HBV pour *handling bleed valve,* par exemple utilisé sur un turbopropulseur, prélève de l'air en sortie de compresseur haute pression ou de compresseur intermédiaire et décharge l'air prélevé dans la veine primaire ou secondaire.

Dans le cas d'une TBV, lorsque la turbomachine passe d'un régime ralenti à un régime pleins gaz, un flux d'air comprimé à haut débit doit être évacué du compresseur, afin d'éviter des risques de pompage. Ceci est également le cas lors des phases transitoires de vol, ou lors des phases de ralenti, ou plus généralement lorsque le pilote est amené à manipuler la commande des gaz.

Ce flux d'air comprimé à évacuer présente à titre indicatif sur certaines turbomachines, une pression d'environ quarante bars et une température d'environ neuf cent degrés Kelvin.

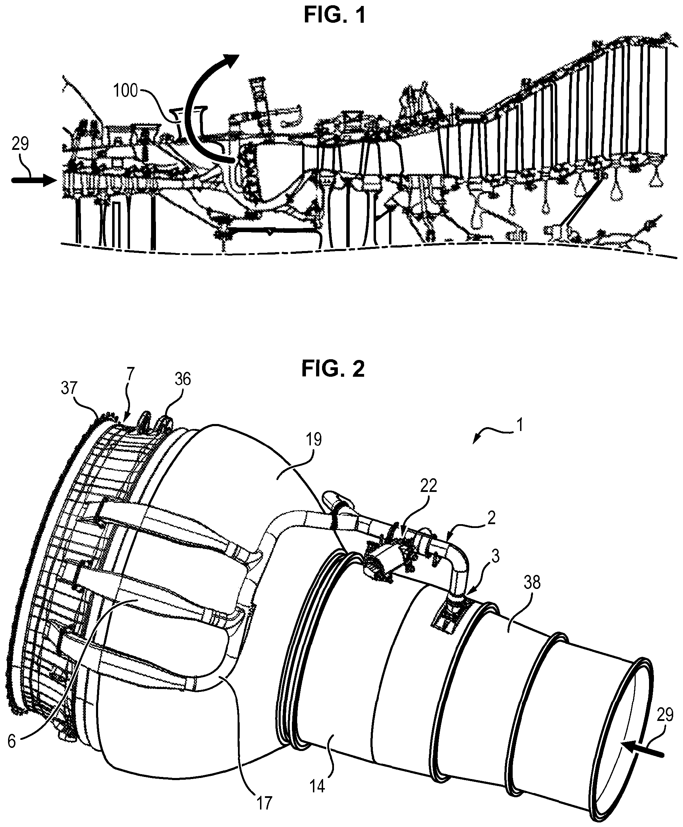

En général, comme représenté en **figure 1**, le flux d'air est prélevé en 100 en aval du compresseur haute pression mais un tel prélèvement 100 à température, vitesse et taux de détente élevés génère des niveaux de bruit intenses.

Ce flux d'air doit donc être déchargé en pression au travers d'un système de décharge et ralenti.

Encore à titre d'exemple, dans une TBV, la pression statique du fluide prélevé est comprise entre deux et huit bars absolus, pour un débit de 0,6 kg/s. Lorsque ce débit atteint une grille percée qui impose une perte de charge importante (pour amener le flux à pression atmosphérique moins un bar environ donc), une détente sur-critique est générée.

Dès lors, il peut y avoir formation de chocs aérodynamiques dans le conduit.

Notamment, nombre de Mach est une donnée importante : s'il est supérieur à 1 au moment de la traversée des éléments opérants, la détente sera alors réalisée à travers un choc.

Il est impératif que le taux de détente dans le système soit inférieur au taux de détente critique du fluide. Notamment si le taux de détente dépasse le taux de détente critique du fluide il peut y avoir une formation de chocs aérodynamiques induisant un fort niveau acoustique. En fonction du rapport des chaleurs spécifiques y dépendant du mélange stœchiométrique du gaz, le taux de détente critique se calcule par :

$$\pi_{crit} = \left( \frac{2}{\gamma+1} \right)^{\frac{-\gamma}{\gamma-1}}$$

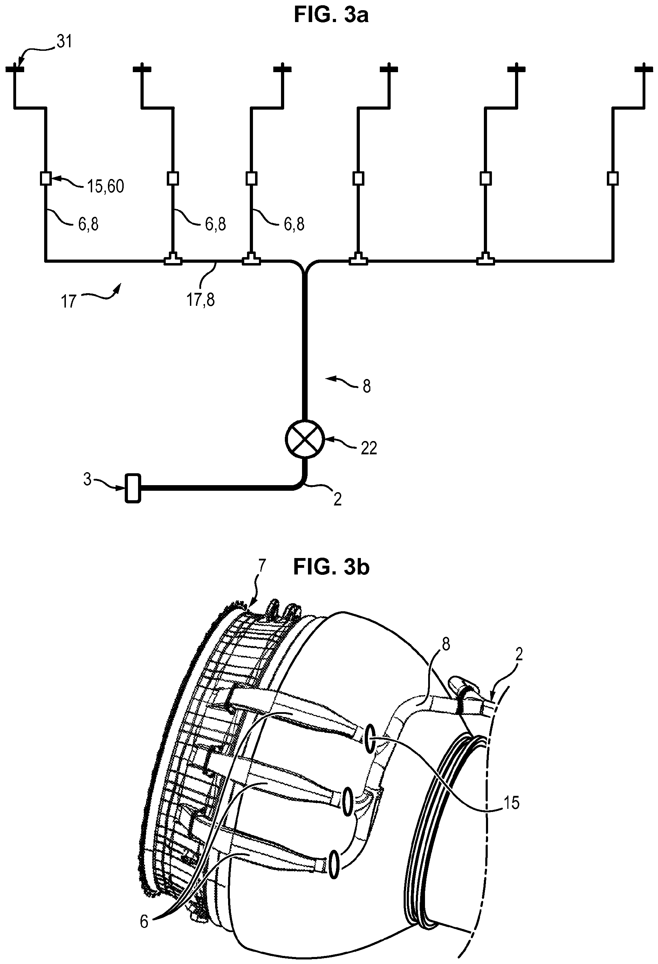

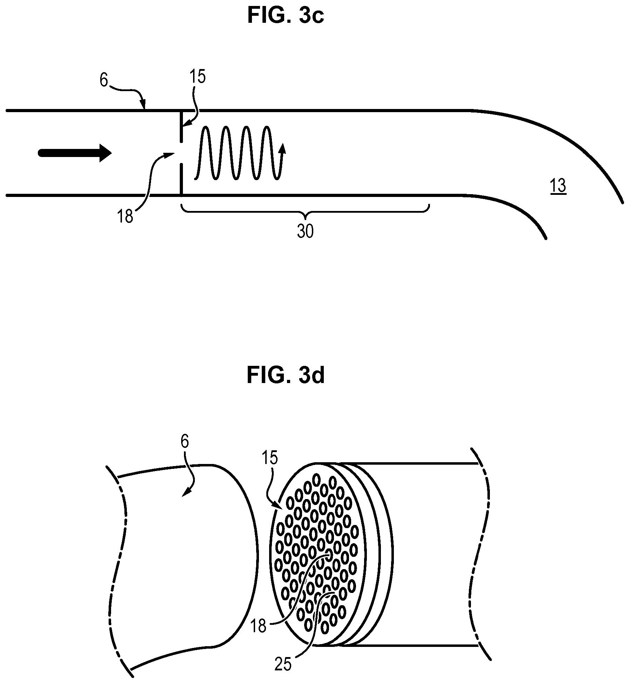

Pour l'air, le taux de détente critique est de 1,89.
Une solution présentée dans le document FR1450491 propose de prélever l'air comprimé à l'aide d'un conduit 2 qui se divise en conduits secondaires 6, 17 (voir **figure 2, 3a, 3b).** A l'intérieur des conduits secondaires 6, 17 notamment, un diaphragme 15 sous forme d'un disque 25 comprenant un orifice 18 **(figure 3c)** ou une pluralité d'orifices **(figure 3d)** permet à la fois de provoquer une perte de charge et de contribuer à la diminution de la vitesse du flux.

La performance de ce diaphragme impose une certaine longueur de conduit, notamment d'une zone 30 en aval du diaphragme, et un tel dispositif nécessite un assemblage de tuyauterie qu'il peut être complexe d'intégrer à la turbomachine.

Une autre solution, appelé « pomme d'arrosoir » (ou *pepper pot* en anglais), consiste à disposer une valve particulière en extrémité du conduit de prélèvement. La pomme d'arrosoir est formée d'une grille percée située en extrémité large d'un évasement, ce qui permet à la fois de ralentir le flux et aussi d'augmenter le contenu spectral acoustique généré par l'écoulement du flux d'air.

En effet, plus les diamètres des percements sont petits et plus le contenu spectral est déplacé vers les aigus. Il est ainsi moins perceptible par l'oreille humaine.

Dans un autre domaine (installations industrielles), le document US6343672 décrit un tel dispositif de détente, en forme de « pomme d'arrosoir », empli d'un matériau granulaire.

Les performances ne sont néanmoins pas toujours satisfaisantes.

PRESENTATION DE L'INVENTION

Afin de pallier les inconvénients de l'art antérieur, l'invention propose un ensemble comprenant un compresseur de turbomachine, et un système de décharge comprenant :

- un conduit d'amenée dont une extrémité est connectée au niveau du compresseur, le conduit étant configuré pour y prélever un flux d'air comprimé par le compresseur,

- un dispositif de détente comprenant une entrée et une sortie, l'entrée étant connectée à une autre extrémité du conduit d'amenée, dans lequel que ledit dispositif de détente comprend :

  • Une enveloppe formant un volume entre l'entrée et la sortie,
  • Un matériau poreux occupant le volume,
  • Des moyens de maintien du matériau poreux au sein de ladite enveloppe,

dans lequel la sortie possède une section ouverte permettant le passage de l'air supérieure à la section ouverte de l'entrée caractérisé en ce que le matériau poreux est un tricot métallique, ou un tricot en céramique, ou un tricot en matériau composite.

Grâce au matériau poreux et l'augmentation de la section ouverte, le flux d'air est mieux ralenti et déchargé, sans création de choc acoustique. Un tel ensemble permet une meilleure intégration dans une turbomachine, notamment parce que la compacité du dispositif est améliorée.

L'invention peut aussi comprendre les caractéristiques suivantes, prises seules ou en combinaison :

- le système de décharge est configuré pour que le nombre de Mach du flux au sein du dispositif de détente soit inférieur à 0,9,

- l'enveloppe présente un évasement divergent depuis l'entrée vers la sortie,

- les moyens de maintien comprennent une première grille percée disposée au niveau de l'entrée et une deuxième grille percée au niveau de la sortie, le matériau poreux étant situé entre les deux grilles et maintenu à l'intérieur de l'enveloppe par les deux grilles,

- la densité surfacique des percements des grilles est identique pour les deux grilles,

- la répartition des percements est homogène sur chacune des grilles,

- la sortie débouche à l'air libre, de type « pomme de douche ».

L'invention propose une turbomachine comprenant un ensemble tel que décrit précédemment, dans lequel le compresseur est un compresseur haute-pression et le conduit prélève de l'air comprimé par le compresseur dans la veine primaire.

La turbomachine peut aussi comprendre une pluralité de système de décharge tels que décrits précédemment, dans lequel les conduits d'amenées desdits systèmes de décharge se rejoignent et partagent l'extrémité connectée au niveau du compresseur haute pression. Ainsi dans le sens de l'écoulement de l'air, le prélèvement se divise en plusieurs conduits et voit sa vitesse diminuer.

En outre, le système de décharge peut être configuré pour rejeter le flux prélevé dans la veine secondaire de la turbomachine.

La turbomachine peut aussi comprendre en plus une turbine basse-pression et un carter situé en sortie de la turbine basse pression, dit carter TRV *(Turbine Rear Vane),* la turbine et le carter étant disposés successivement en aval du compresseur haute pression. Dans ladite turbomachine, le système de décharge est en communication fluidique avec la veine primaire au niveau du carter de sortie de la turbine basse pression.

Enfin, l'invention propose un procédé de dimensionnement d'un système de décharge d'air d'un compresseur d'une turbomachine tel que présenté précédemment, dans lequel ledit système de décharge d'air est adapté pour que le nombre de Mach du flux d'air traversant le dispositif de détente soit inférieur à 0,9.

PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :

- la figure 1 est une représentation d'une turbomachine de l'art antérieur ;
- la figure 2 est une représentation d'une partie de turbomachine comprenant l'invention, selon un mode de réalisation de la turbomachine ;
- la figure 3a représente un conduit se terminant par des conduits secondaires comprenant chacun un système de décharge selon l'invention ;
- la figure 3b représente le conduit se terminant par les conduits secondaires débouchant dans un carter de sortie d'une turbine basse pression de la turbomachine ;
- les figures 3c et 3d représentent un diaphragme tel qu'existant dans l'art antérieur,
- les figures 4 et 5 représentent deux modes de réalisation de l'invention,
- la figure 6 représente un disque pouvant être situé en entrée ou en sortie de l'invention, selon un mode de réalisation ;
- les figures 7a, 7b, 7c, 8a, 8b représentent différents modes d'implémentation de l'invention.

DESCRIPTION DETAILLEE

L'invention sera décrite en détail dans le cadre d'une TBV sur une turbomachine mais s'applique à tout système de prélèvement d'air comprimé au niveau d'un compresseur 38 de turbomachine 1. Par « au niveau », on entend « juste en aval » du compresseur, là où le flux d'air est à la pression de sortie du compresseur.

Comme illustré en **Figure 2,** la turbomachine à double flux 1 comprend de manière classique, dans le sens de circulation du flux d'air 29, un compresseur haute pression 38, une turbine haute pression 14 et une turbine basse pression 19. Le sens d'écoulement du flux d'air traversant la turbomachine 1 est représenté par une flèche 29 sur les **figures 1 et 2.**

La turbomachine 1 comprend une veine primaire qui traverse les turbines 14, 19 et le compresseur 38 haute pression et comprend une veine secondaire, située radialement autour de la veine primaire.

Les rôles et fonctions de ces veines dans le cadre d'une turbomachine ne seront pas détaillés ici mais sont bien connus de l'homme du métier.

La turbomachine 1 comprend en outre un carter 7, disposé en sortie de la turbine basse pression 19. Ce carter 7 est désigné par l'expression anglo-saxonne « *Turbine Rear Vane* » (TRV) par l'homme du métier. Ce carter 7 TRV est classiquement disposé avant la tuyère d'éjection. Il sert notamment à maintenir la structure de la turbomachine.

Comme illustré en **figure 3b,** le carter 7 TRV est sensiblement de révolution. Il comprend une pluralité de bras axiaux structuraux, l'espace séparant les bras définissant des ouvertures.

La turbomachine 1 comprend un système de décharge 50 dont la fonction est de prélever un flux d'air sous pression au niveau du compresseur 38 pour le ralentir et le détendre et ensuite le refouler à un autre endroit de la turbomachine.

En référence aux **figures 3a, 3b, 4 et 5,** le système de décharge 50 comprend un conduit d'amenée 8 dont une extrémité est connectée au niveau du compresseur 38.

Soit directement, soit après une subdivision (qui sera détaillée par la suite), ce conduit d'amenée 8 est connecté à un dispositif de détente 60 permettant de ralentir et de faire baisser la pression de l'air. L'air pénètre dans le dispositif de détente 60 par une entrée 61 et en ressort par une sortie 62. Le dispositif de détente 60 comprend une enveloppe 80 qui permet de définir un volume V avec l'entrée 61 et la sortie 62. Préférablement, l'enveloppe 80 est de révolution pour garder les effets de symétrie. Cette symétrie permet une réduction des efforts structuraux sur la canalisation, une simplicité de montage et de fabrication. On obtient également une symétrie dans l'écoulement : tout le volume est utilisé pour cet écoulement, c'est donc une configuration optimum du point de vue masse/efficacité.

Dans une alternative on peut également avoir une enveloppe non-axisymétrique pour résoudre d'éventuelles problématiques d'encombrement dans l'intégration du système de décharge.

Ledit volume V est occupé par un matériau poreux 64 permettant au flux d'air de le traverser en ralentissant et en subissant une perte de charge progressive. Le matériau poreux 64 est notamment défini par sa porosité, sa tortuosité et sa densité. Un tel matériau permet un masquage acoustique performant et crée une détente suffisamment progressive pour limiter tout choc.

Dans un mode de réalisation préférentiel, le matériau poreux est un tricot métallique, c'est-à-dire une sorte d'éponge métallique par exemple en inox.

Dans une autre mode de réalisation, le matériau poreux est en céramique ou en matériau composite.

En fonction du besoin identifié, l'homme du métier choisira parmi le matériau le plus adapté.

L'utilisation d'un ensemble volumique au lieu d'un diaphragme tel que décrit en introduction, qui était un moyen surfacique, améliore la progressivité de la détente en évitant d'ajouter du bruit par une détente discontinue.

En outre, la surface ouverte $S_{62}$ du dispositif de détente 60 au niveau de la sortie 62 est supérieure à la surface ouverte $S_{61}$ du dispositif de détente au niveau de l'entrée 61. On définit la surface ouverte comme la surface traversée effectivement par un flux d'air, en utilisation. Pour une section donnée, la surface ouverte est nécessairement inférieure à l'aire de ladite section.

Le dispositif de détente 60 a alors plusieurs fonctions :

- Créer une perte de charge continue grâce au volume V de matériau poreux 64,
- Homogénéiser et stabiliser l'écoulement
- Permettre une diffusion rapide entre l'entrée 61 et la sortie 62.

Ceci permet donc de réduire significativement le bruit en aval du dispositif de détente 60.

Avantageusement, le dispositif de détente 60 permet de masquer le bruit amont transmis vers l'aval grâce à la taille réduite des conduites. Des moyens de maintien 70 permettent de maintenir le matériau poreux 70 au sein de l'enveloppe 80, entre l'entrée 61 et la sortie 62. Il existe plusieurs façons de réaliser ces moyens de maintien 70 : colle, déformation de l'enveloppe 80, butées...

Un mode de réalisation préférentiel consiste à utiliser une première grille 71 positionnée en entrée 61 du dispositif de détente 60 et une deuxième grille 72 positionnée en sortie 62 du dispositif de détente 60.

Ces grilles 71, 72, qui sont percées et permettent le passage du flux d'air, contribuent en outre à la perte de charge.

Il existe plusieurs types de grille. On définit une densité de percement D, qui correspond au ratio de la surface ouverte (la surface passante) sur la surface totale de la grille.

Il existe pour cela plusieurs modes de réalisation possibles pour satisfaire le critère d'augmentation de la surface ouverte entre l'entrée et la sortie, lesdits modes pouvant être complémentaires.

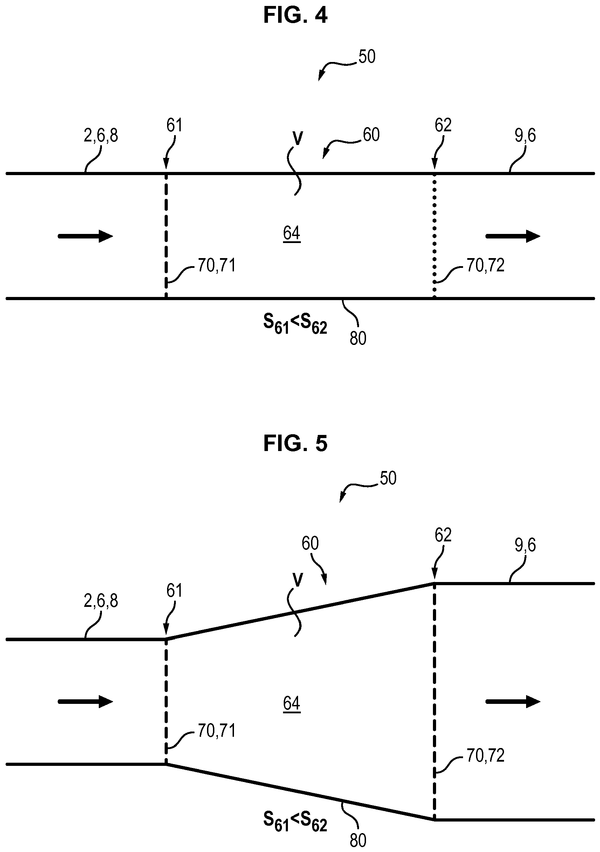

Si les moyens de maintien 70 ne modifient pas les surface ouvertes S61, S62 des entrées/sorties 61, 62, alors la section de l'enveloppe 80 va en augmentant depuis l'entrée 61 vers la sortie 62, c'est-à-dire que l'enveloppe 80 définit un évasement divergent (voir **figure 5**) en direction de l'aval. L'enveloppe 80 a alors la forme d'un cône tronqué, en aval et en amont.

Dans le cas où les moyens de maintien 70 sont les grilles 71, 72 définies précédemment, alors la surface ouverte $S_{61}$ de la première grille 71 est supérieure à la surface ouverte $S_{62}$ de la deuxième grille 72. Il y a plusieurs façons de réaliser cela :

- Soit l'enveloppe 80 présente un évasement (vers l'aval donc) (voir **figure 5),** auquel cas l'augmentation de la surface peut venir du fait que la surface totale de la grille augmente (à densité de percement D constante),
- Soit il n'y a pas d'évasement (voir **figure 4),** auquel cas l'augmentation de la surface vient du fait que la densité de percement D de la deuxième grille 72 est supérieure à celle de la première 71.

Le matériau poreux 68 limite le bruit créé par la turbulence de la première grille 71 impactant la deuxième grille 72.

Il est à noter qu'il est possible d'avoir une densité surfacique D de percements supérieure dans la deuxième grille 72 que dans la première grille (71) même en cas d'évasement.

Afin de limiter les effets de choc acoustique, le système de décharge 50 est configuré pour que le nombre de Mach du flux dans le dispositif de détente 60 soit strictement inférieur à 0,9. En d'autres termes, le nombre de Mach du flux passant la section ouverte $S_{61}$ de l'entrée 61 et la section ouverte $S_{62}$ de la sortie 62 est strictement inférieur à 0,9. Avantageusement, la surface ouverte des grilles assure un Mach inférieur à 0.9.

En effet, la caractéristique de Mach impose des conditions sur le système de décharge 50 et le dispositif de détente 60, comme notamment une valeur minimum pour la section ouverte du dispositif de détente 60.

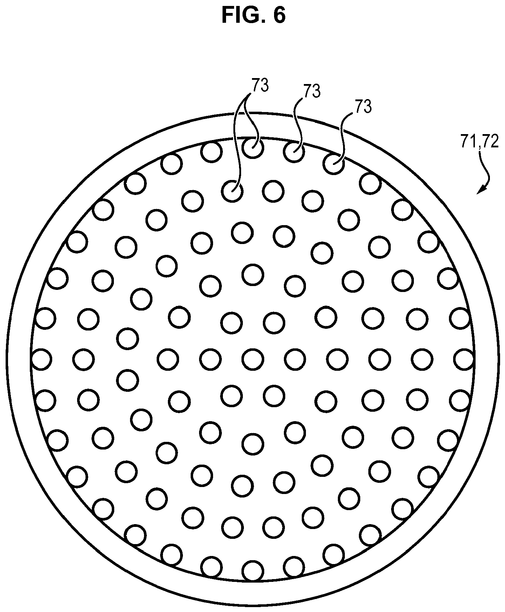

Dans un mode de réalisation particulier présenté en **figure 6,** la répartition des percements 73 est homogène.

Dans un mode de réalisation, combinable avec les modes précédents, le diamètre des percements 73 est préférablement inférieur à 5mm.

Dans un mode de réalisation, le matériau poreux 64 présente des caractéristiques physiques constantes dans tout son volume.

Dans un mode de réalisation particulièrement avantageux, le matériau poreux 64 possède un gradient de porosité (ou de densité, respectivement) décroissant (ou croissant, respectivement) depuis l'entrée 61 vers la sortie 62. En d'autres termes, le matériau est plus poreux (moins dense, respectivement) au niveau de l'entrée 61 qu'au niveau de la sortie 62. Comme la vitesse du flux diminue au travers de le dispositif de détente 60, le gradient permet de garder un taux de détente par unité de longueur constant au travers du dispositif de détente 60.

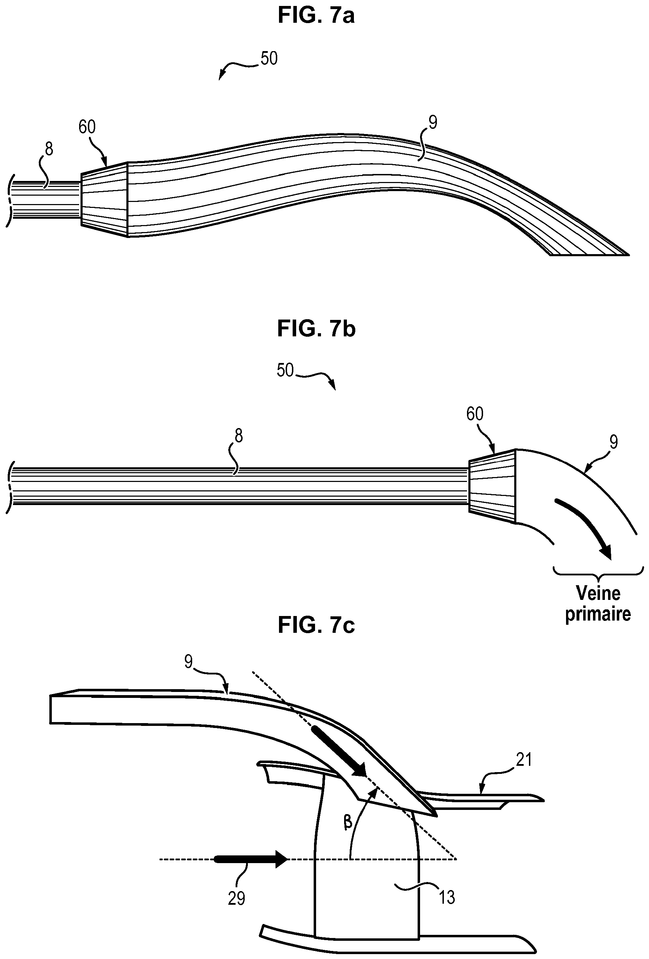

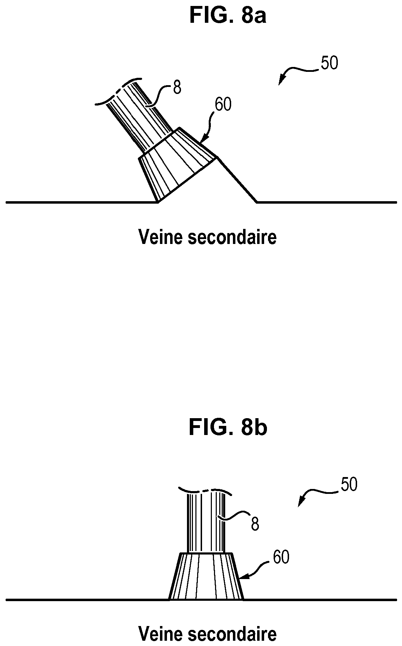

Les systèmes de décharge 50 peuvent relâcher le flux de plusieurs façons. Une première consiste à relier la sortie du dispositif de détente 60 à un autre conduit, dit de libération 9, et ce conduit va déverser le flux à un endroit précis **(figures 7a, 7b)**. Une deuxième consiste à avoir un dispositif de détente 60 qui fonctionne comme une pomme de douche *(pepperpot* en anglais), c'est-à-dire que la sortie 62 est libre **(**figures 8a, 8b). Dans ce cas et lorsque les moyens de maintien 70 comprennent la seconde grille 72, on peut prévoir que la seconde grille 72 ait une forme bombée vers l'extérieur du dispositif de détente 60, pour favoriser la dispersion.

La libération du flux peut se faire selon un angle particulier β avec une direction longitudinale de la turbomachine 1 pour éviter des turbulences (voir **figure 7c).**

Il peut aussi être nécessaire d'avoir plusieurs dispositifs de détente 60. A cet effet, on peut disposer plusieurs conduits d'amenée 8 qui se rejoignent au niveau d'une extrémité qui prélève le flux d'air du compresseur 38. Cette subdivision (qui sera détaillée dans le cadre du TBV) permet de diminuer la vitesse du flux d'air.

A présent, l'intégration d'un tel dispositif dans un TBV va être décrite **(figures 2, 3b, 7c).**

Le conduit 2 tel que représenté sur la **figure 2** comprend également une vanne 22 permettant de contrôler le débit du flux d'air prélevé par le conduit 2, qui fait office de conduit d'amenée 8. L'ouverture et la fermeture de cette vanne 22 sont classiquement contrôlées par le calculateur de l'aéronef, en fonction des consignes du pilote. Cette vanne 22 est classiquement dénommée TBV par l'homme du métier, pour « *Transcient Bleed Valve* ».

Dans le mode de réalisation illustré sur les figures, le conduit 2 se termine à son autre extrémité par une pluralité de conduits 6 secondaires, les conduits 6 secondaires étant reliés à des ouvertures 13 du carter 7 TRV, pour y décharger le flux d'air prélevé.

Selon une réalisation possible, l'autre extrémité du conduit 2 se termine par au moins deux branches 17 distinctes portant chacune une partie des conduits 6 secondaires. Sur l'exemple, chaque branche 17 porte trois conduits 6 secondaires.

Selon un mode de réalisation, l'extrémité 31 des conduits 6 secondaires traversent la virole 21 externe du carter 7 TRV pour déverser dans les ouvertures 13 le flux d'air prélevé (voir **figures 2, 3b et 7c**). A cet effet, des trous peuvent être prévus dans la virole 21 externe pour permettre le passage de l'extrémité du conduit secondaire 6. Le flux d'air détendu est ainsi déchargé dans la veine primaire.

La turbomachine 1 comprend dans chaque conduit secondaire 6 un dispositif de détente 60. Dans ce mode de réalisation, le conduit secondaire 6, issu d'une subdivision du conduit 2, fait office de conduit d'amenée 8 et de conduit de libération 9.

La position des dispositifs de détente 60 influe sur le Mach en sortie des conduits 6 secondaires.

Il est souhaitable que le flux d'air prélevé conserve une pression élevée dans les conduits 2, 6 (en amont du dispositif de détente 60) sur la distance la plus élevée possible, car cette pression élevée permet de maintenir un diamètre réduit des conduits 2, 6. Il est donc souhaitable de pouvoir disposer les dispositifs de détente 60 le plus en aval possible des conduits 6, afin de maximiser la longueur sur laquelle le conduit 2 et les conduits 6 secondaires présentent un diamètre réduit, par exemple de valeur inférieure à 3 pouce (voir **figure 7b** versus **7a**). Grâce aux propriétés aérodynamiques et acoustiques du dispositif de détente 60, cela est permis.

Selon un mode de réalisation, illustré en **figure 7a, 7b, 7c** les conduits de libération 9 présentent, à leurs extrémités reliées aux ouvertures 13, un angle β avec l'axe longitudinal de la turbomachine inférieur à 45°. Ceci permet d'imposer que le flux d'air prélevé introduit dans les ouvertures 13 présente un angle β inférieur à 45° avec le flux 29 primaire circulant dans les ouvertures 13 de la turbomachine. Préférentiellement, l'angle β est inférieur à 35°.

Alternativement, puisque le dispositif de détente 60 permet une détente efficace du flux d'air en respectant les contraintes acoustiques, il est possible de décharger non pas dans la veine primaire mais dans la veine secondaire, située radialement à l'extérieur de la veine primaire.

Une telle architecture permet de raccourcir les canalisations à monter et facilite l'intégration.

Dans ce mode de réalisation, on peut disposer le dispositif de détente 60 dans une configuration de type pomme de douche (voir figures 8a,8b).

L'invention s'applique aussi aux valves HBV. Les HBV peuvent être intégrées dans un turbopropulseur et dans ce cas, l'air est éjecté à l'extérieur de la turbomachine. Lorsqu'une HBV est intégrée sur un turbofan, l'éjection de l'air s'effectue dans la veine secondaire. Le principe est d'éjecter l'air dans la veine extérieure la plus proche du prélèvement (réalisé dans la veine primaire) afin de minimiser les longueurs de canalisation. On appelle veine un flux d'air canalisé ou nous traversant le moteur de part en part.

Enfin, l'invention propose un procédé pour décharger de l'air au niveau d'un compresseur 38. Durant cette décharge, le nombre de Mach de l'air qui traverse le dispositif 60 est inférieur à 0,9.

**Revendications**

1. Ensemble comprenant un compresseur (38) de turbomachine (1), et un système de décharge d'air du compresseur (50) comprenant :

- un conduit d'amenée (8) dont une extrémité (3) est connectée au niveau du compresseur (38), le conduit d'amenée (2, 6, 8) étant configuré pour y prélever un flux d'air comprimé par le compresseur (38),
- un dispositif de détente (60) comprenant une entrée (61) et une sortie (62), l'entrée (61) étant connectée à une autre extrémité du conduit d'amenée (8), dans lequel ledit dispositif de détente (60) comprend :

• Une enveloppe (80) formant un volume (V) entre l'entrée (61) et la sortie (62),
• Un matériau poreux (64) occupant le volume (V),
• Des moyens de maintien (70) du matériau poreux (64) au sein de ladite enveloppe (80),

dans lequel la sortie (62) possède une section ouverte $(S_{62})$ permettant le passage de l'air supérieure à la section ouverte $(S_{61})$ de l'entrée (61), **caractérisé en ce que** le matériau poreux (64) est un tricot métallique, ou un tricot en céramique, ou un tricot en matériau composite.

2. Ensemble selon la revendication précédente, dans lequel le système de décharge (50) est configuré pour que le nombre de Mach du flux au sein du dispositif de détente (60) soit inférieur à 0,9.

3. Ensemble selon l'une quelconque des revendications précédentes, dans lequel l'enveloppe (80) présente un évasement divergent depuis l'entrée (61) vers la sortie (62).

4. Ensemble selon l'une quelconque des revendications précédentes, dans lequel les moyens de maintien (70) comprennent une première grille percée (71) disposée au niveau de l'entrée (61) et une deuxième grille percée (72) au niveau de la sortie (62), le matériau poreux (64) étant situé entre les deux grilles (71, 72) et maintenu à l'intérieur de l'enveloppe (80) par les deux grilles (71, 72).

5. Ensemble selon la revendication précédente, dans lequel la densité surfacique des percements des grilles (71, 72) est identique pour les deux grilles (71, 72) et/ou la répartition des percements est homogène sur chacune des grilles (71, 72).

6. Turbomachine comprenant un ensemble selon l'une quelconque des revendications précédentes, dans laquelle le compresseur (38) est un compresseur haute-pression et le conduit d'amenée (2) prélève de l'air comprimé par le compresseur haute pression dans une veine dite primaire de la turbomachine.

7. Turbomachine selon la revendication 6 comprenant une pluralité de système de décharge d'air (50) comprenant chacun un conduit d'amenée (8) et un dispositif de détente (60), dans laquelle les conduits d'amenées (8) se rejoignent et partagent l'extrémité (3) connectée au niveau du compresseur haute pression (38).

8.  Turbomachine selon la revendication 6 ou 7, dans lequel le système de décharge (50) est configuré pour rejeter le flux prélevé dans une veine dite secondaire de la turbomachine.

9.  Turbomachine selon la revendication 6 ou 7, comprenant en outre une turbine basse-pression et un carter de sortie de la turbine basse pression (7) disposés successivement en aval du compresseur haute-pression (38), dans lequel le système de décharge (50) est en communication fluidique avec la veine primaire au niveau d'un carter de sortie de turbine basse pression (7) de la turbomachine.

10. Procédé de dimensionnement d'un ensemble selon l'une quelconque des revendications 1 à 5, dans lequel ledit système de décharge d'air (50) est adapté pour que le nombre de Mach du flux d'air traversant le dispositif de détente (60) soit inférieur à 0,9.

**Patentansprüche**

1.  Anordnung umfassend einen Kompressor (38) einer Turbomaschine (1) und ein Luftausstoßsystem (50) umfassend:

    - eine Zuführungsleitung (8) von der ein Ende (3) am Kompressor (38) angeschlossen ist, wobei die Zuführungsleitung (2, 6, 8) so konfiguriert ist, dass sie einen vom Kompressor (38) verdichteten Luftstrom aufnimmt,
    - eine Expansionsvorrichtung (60) umfassend einen Einlass (61) und einen Auslass (62), wobei der Einlass (61) an ein anderes Ende der Zuführungsleitung (8) angeschlossen ist, wobei die Expansionsvorrichtung (60) Folgendes umfasst:

        • Einen Behälter (80), der ein Volumen (V) zwischen dem Einlass (61) und dem Auslass (62) bildet,
        • ein poröses Material (64), das das Volumen (V) einnimmt,
        • Mittel zum Halten (70) des porösen Materials (64) im Behälter (80),
        wobei der Auslass (62) einen offenen Abschnitt ($S_{62}$) aufweist, der den Durchgang von Luft größer als der offene Abschnitt ($S_{61}$) des Einlasses (61) erlaubt, **dadurch gekennzeichnet, dass** das poröse Material (64) ein Metallgestrick oder ein Keramikgestrick oder ein Gestrick aus Verbundmaterial ist.

2.  Anordnung nach dem vorstehenden Anspruch, wobei das Luftausstoßsystem (50) so konfiguriert ist, dass die Machzahl des Flusses in der Expansionsvorrichtung (60) kleiner als 0,9 ist.

3.  Anordnung nach einem beliebigen der vorstehenden Ansprüche, wobei der Behälter (80) vom Einlass (61) zum Auslass (62) eine divergierende Aufweitung aufweist.

4.  Anordnung nach einem beliebigen der vorstehenden Ansprüche, wobei die Mittel zum Halten (70) ein erstes durchbohrtes Gitter (71) umfassen, das am Einlass (61) angeordnet ist, und ein zweites durchbohrtes Gitter (72) am Auslass (62), wobei das poröse Material (64) zwischen den beiden Gittern (71, 72) angeordnet ist und durch die beiden Gitter (71, 72) im Behälter (80) gehalten wird.

5.  Anordnung nach dem vorstehenden Anspruch, wobei die Oberflächendichte der Gitterdurchbohrungen (71, 72) für beide Gitter (71, 72) identisch ist und/oder die Verteilung der Durchbohrungen auf jedem der Gitter (71, 72) homogen ist.

6.  Turbomaschine mit einer Anordnung nach einem beliebigen der vorstehenden Ansprüche, wobei der Kompressor (38) ein Hochdruckkompressor ist und die Zuführungsleitung (2) durch den Hochdruckkompressor verdichtete Luft in einem sogenannten Primärstrom der Turbomaschine aufnimmt.

7.  Turbomaschine nach Anspruch 6, umfassend eine Mehrzahl von Luftausstoßsystemen (50), die jeweils eine Zuführungsleitung (8) und eine Expansionsvorrichtung (60) umfassen, wobei die Zuführungsleitungen (8) zusammenlaufen und sich das an den Hochdruckkompressor (38) angeschlossene Ende (3) teilen.

8.  Turbomaschine nach Anspruch 6 oder 7, wobei das Luftausstoßsystem (50) so konfiguriert ist, dass es die aus einem so genannten Sekundärstrom der Turbomaschine aufgenommene Strömung ableitet.

9.  Turbomaschine nach Anspruch 6 oder 7, ferner mit einer Niederdruckturbine und einem Auslassgehäuse der Niederdruckturbine (7), die nacheinander stromabwärts des Hochdruckkompressors (38) angeordnet sind, wobei das Luftausstoßsystem (50) in Fluidverbindung mit dem Primärstrom an einem Niederdruckturbinen-Auslassgehäuse (7) der Turbomaschine steht.

10. Verfahren zur Dimensionierung einer Anordnung nach einem beliebigen der Ansprüche 1 bis 5, wobei das Luftausstoßsystem (50) so angepasst ist, dass die Machzahl des die Expansionsvorrichtung (60) durchquerenden Luftstroms kleiner als 0,9 ist.

**Claims**

1. An assembly comprising a compressor (38) for a turbomachine (1), and an air discharge system (50) of the compressor comprising:

   - a supply line (8) whose one end (3) is connected to the level of the compressor (38), the supply line (2, 6, 8) being configured to take therefrom an air flow compressed by the compressor (38),
   - an expansion device (60) comprising an inlet (61) and an outlet (62), the inlet (61) being connected to another end of the supply line (8), wherein said expansion device (60) comprises:

     • A shell (80) forming a volume (V) between the inlet (61) and the outlet (62),
     • A porous material (64) occupying the volume (V),
     • Means for maintaining (70) the porous material (64) within said shell (80),
     wherein the outlet (62) has an open section ($S_{62}$) allowing the passage of air which is above the open section ($S_{61}$) of the inlet (61), **characterized in that** the porous material (64) is a metal knit or a ceramic knit or a composite material knit.

2. The assembly according to the preceding claim, wherein the discharge system (50) is configured so that the Mach number of the flow within the expansion device (60) is less than 0.9.

3. The assembly according to any one of the preceding claims, wherein the shell (80) has a divergent flare from the inlet (61) towards the outlet (62).

4. The assembly according to any one of the preceding claims, wherein the holding means (70) comprise a first pierced grid (71) disposed at the inlet (61) and a second pierced grid (72) disposed at the outlet (62), the porous material (64) being located between the two grids (71, 72) and held inside the shell (80) by the two grids (71, 72).

5. The assembly according to the preceding claim, wherein the surface density of the drillings of the grids (71, 72) is identical for the two grids (71, 72) and/or the distribution of the drillings is uniform on each of the grids (71, 72).

6. A turbomachine comprising an assembly according to any one of the preceding claims, wherein the compressor (38) is a high-pressure compressor and the supply line (2) takes air compressed by the high-pressure compressor from a flowpath called primary flowpath of the turbomachine.

7. The turbomachine according to claim 6 comprising a plurality of air discharge system (50) each comprising a supply line (8) and an expansion device (60), wherein the supply lines (8) meet and share the end (3) connected to the level of the high-pressure compressor (38).

8. The turbomachine according to claim 6 or 7, wherein the discharge system (50) is configured to reject the flow taken from a flowpath called secondary flowpath of the turbomachine.

9. The turbomachine according to claim 6 or 7, further comprising a low-pressure turbine and an outlet casing (7) of the low-pressure turbine disposed successively downstream of the high-pressure compressor (38), wherein the discharge system (50) is in fluid communication with the primary flowpath at an outlet casing (7) of the low-pressure turbine of the turbomachine.

10. A method for dimensioning an assembly according to any one of claims 1 to 5, wherein said air discharge system (50) is adapted so that the Mach number of the air flow passing through the expansion device (60) is less than 0.9.

EP 3 387 260 B1

FIG. 1

100

29

FIG. 2

37 7 36

19

22

2

3

38

6

17

14

29

1

## FIG. 3a

31

15,60

6,8    6,8    6,8

17    17,8

8

22

3    2

## FIG. 3b

7

8    2

15

6

**FIG. 3c**

**FIG. 3d**

FIG. 4

FIG. 5

**FIG. 6**

## FIG. 7a

## FIG. 7b

Veine
primaire

## FIG. 7c

# FIG. 8a

Veine secondaire

# FIG. 8b

Veine secondaire

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1450491